# EUROPEAN PATENT APPLICATION

(11) **EP 4 589 979 A1**
(43) Date of publication of application: **23.07.2025**
(21) Application number: 23864689.7
(22) Date of filing: 12.09.2023
(51) Int. Cl.: H04N 23/695, G06V 40/20, G06V 10/12

(54) **PHOTOGRAPHING PARAMETER ADJUSTMENT METHOD AND APPARATUS, ELECTRONIC DEVICE AND READABLE STORAGE MEDIUM**

(30) Priority: 16.09.2022 CN 202211130812
(71) Applicant: Vivo Mobile Communication Co., Ltd., Dongguan, Guangdong 523863 (CN)
(72) Inventor: GAO, Ce, Dongguan, Guangdong 523863 (CN)
(74) Representative: Conti, Marco
(86) International application number: PCT/CN2023/118216
(87) International publication number: WO 2024/055957

(57) **Abstract**

This application relates to the field of computer technologies, and discloses a photographing parameter adjustment method and apparatus, an electronic device, and a readable storage medium. The method includes: obtaining a first image in a video, where the first image includes a shooting object performing a first sign language action, and the first sign language action corresponds to a first human body key point of the shooting object; determining first sign language information based on first coordinate information of the first human body key point in the first image, where the first sign language information is used for representing a body pose, an action trajectory, and a facial morphology of the shooting object in a case that the shooting object performs the first sign language action; predicting second coordinate information based on the first coordinate information and the first sign language information, where the second coordinate information is coordinate information of the first human body key point of the shooting object in a case that the shooting object performs a second sign language action; and adjusting a photographing parameter based on the second coordinate information.

## Description

### CROSS-REFERENCE TO RELATED APPLICATIONS

This application claims priority to Chinese Patent Application 202211130812.9 filed in China on September 16, 2022, which is incorporated herein by reference in its entirety.

### TECHNICAL FIELD

This application relates to the field of computer technologies, and in particular, to a photographing parameter adjustment method and apparatus, an electronic device, and a readable storage medium.

### BACKGROUND

A sign language (sign language) is a communication language among hearing-impaired people that the hearing-impaired people use a change in a gesture or an action to simulate an appearance or a syllable to constituent a specific meaning or word. With the development of science and technology, a user may communicate by making a video call, or may shoot a sign language video to share an interesting thing in life.

In the related art, to ensure accuracy of sign language expression and prevent a hand of a user from appearing outside a camera, the user may shoot a sign language video through a front camera of an electronic device, or through cooperation between two users, that is, one user shoots a sign language video for the other user by using a rear camera of the electronic device. However, the above two cases rely on only manual adjustment of a position of the user and a distance from the camera, to ensure that the hand of the user always appear in a camera picture. In this case, processes of shooting the sign language video are complicated.

### SUMMARY

Embodiments of this application are intended to provide a photographing parameter adjustment method and apparatus, an electronic device, and a readable storage medium, which can resolve an existing problem of complicated photographing processes during sign language video shooting.

According to a first aspect, an embodiment of this application provides a photographing parameter adjustment method, applied to an electronic device. The photographing parameter adjustment method includes:
obtaining a first image in a video, where the first image includes a shooting object performing a first sign language action, and the first sign language action corresponds to a first human body key point of the shooting object;
determining first sign language information based on first coordinate information of the first human body key point in the first image, where the first sign language information is used for representing a body pose, an action trajectory, and a facial morphology of the shooting object in a case that the shooting object performs the first sign language action;
predicting second coordinate information based on the first coordinate information and the first sign language information, where the second coordinate information is coordinate information of the first human body key point of the shooting object in a case that the shooting object performs a second sign language action; and
adjusting a photographing parameter based on the second coordinate information.

According to a second aspect, an embodiment of this application provides a photographing parameter adjustment apparatus, applied to an electronic device. The photographing parameter adjustment apparatus includes:
an obtaining module, configured to obtain a first image in a video, where the first image includes a shooting object performing a first sign language action, and the first sign language action corresponds to a first human body key point of the shooting object;
a determining module, configured to determine first sign language information based on first coordinate information of the first human body key point in the first image, where the first sign language information is used for representing a body pose, an action trajectory, and a facial morphology of the shooting object in a case that the shooting object performs the first sign language action;
a calculation module, configured to predict second coordinate information based on the first coordinate information and the first sign language information, where the second coordinate information is coordinate information of the first human body key point of the shooting object in a case that the shooting object performs a second sign language action; and
an adjustment module, configured to adjust a photographing parameter based on the second coordinate information.

According to a third aspect, an embodiment of this application provides an electronic device, including a processor, a memory, and a program or instructions stored on the memory and executable by the processor. The program or the instructions, when executed by the processor, implement the steps of the photographing parameter adjustment method in the first aspect.

According to a fourth aspect, an embodiment of this application provides a readable storage medium, storing a program or instructions. The program or the instructions, when executed by a processor, implement the steps of the photographing parameter adjustment method in the first aspect.

According to a fifth aspect, an embodiment of this application provides a chip, including a processor and a photographing interface. The photographing interface is coupled to the processor, and the processor is configured to execute a program or instructions to implement the steps of the photographing parameter adjustment method in the first aspect.

According to a sixth aspect, an embodiment of this application provides a computer program product, stored in a storage medium. The program product is executed by at least one processor to implement the steps of the photographing parameter adjustment method in the first aspect.

In embodiments of this application, the first image of the shooting object performing the first sign language action in the video may be identified, to obtain the first human body key point of the shooting object corresponding to the first sign language action. Next, the first sign language information used for representing the body pose, the action trajectory, and the facial morphology of the shooting object in a case that the shooting object performs the first sign language action is determined based on the first coordinate information of the first human body key point in the first image. Then the second coordinate information of the first human body key point of the shooting object in a case that the shooting object performs the second sign language action is predicted based on the first coordinate information and the first sign language information, and whether the shooting object appears in a photographing range of a camera module in a case that the shooting object performs the second sign language action immediately after the first sign language action is calculated based on the second coordinate information. In a case that the second sign language action does not appear in a photographing range of a camera module, the shooting object does not need adjust a position, a photographer does not need to adjust a position of the electronic device, and the photographing parameter can be adjusted based on the second coordinate information, so as to photograph a target image including a second sign language action performed by the shooting object. In this way, it can be ensured that the consecutive sign language actions of the user always appear in a camera picture during video recording without manually adjusting the electronic device by the user, so that processes of shooting the sign language video are simple, and efficiency of shooting the sign language video is improved, thereby increasing a success rate of the sign language video shot by the user.

### BRIEF DESCRIPTION OF THE DRAWINGS

FIG. 1 is a flowchart of a photographing parameter adjustment method according to an embodiment of this application;
FIG. 2 is a schematic diagram of a sign language action according to an embodiment of this application;
FIG. 3 is a schematic structural diagram of a photographing parameter adjustment apparatus according to an embodiment of this application;
FIG. 4 is a schematic structural diagram of an electronic device according to an embodiment of this application; and
FIG. 5 is a schematic diagram of a hardware structure of an electronic device according to an embodiment of this application.

### DETAILED DESCRIPTION

Technical solutions in embodiments of this application are clearly described below with reference to drawings in embodiments of this application. Apparently, the described embodiments are merely some rather than all embodiments of this application. All other embodiments obtained by persons skilled in the art based on embodiments of this application fall within the protection scope of this application.

Terms "first", "second", and the like in this specification and the claims of this application are used for distinguishing between similar objects, rather than describing a specific sequence or order. It should be understood that data used in this way may be transposed where appropriate, so that embodiments of this application described herein may be implemented in an order different from those illustrated or described herein. In addition, the objects distinguished by "first", "second", and the like are generally of the same class and do not limit a quantity of objects. For example, one or more first objects may be arranged. In addition, "and/or" used in this specification and the claims indicates at least one of the connected objects. The character "/" generally indicates an "or" relationship between associated objects.

In the related art, in a case that a user (for example, a hearing-impaired person or a healthy person familiar with a sign language) photographs a sign language video by using an electronic device, in an example, the user may shoot the sign language video through a front camera of the electronic device, at the beginning, the user naturally drops two hands at a center of a photographing picture. However, in a case that the user performs a complex sign language action, a case in which the two hands slide out of a photographing range as a result of an excessively large action range exists, thereby affecting accuracy of sign language expression. In another example, cooperation between two users is adopted. To be specific, a user A shoots a sign language video for a user B by using a rear camera of the electronic device. However, in a case that the user B performs a complicated sign language action, and the user A cannot adjust the electronic device in time as a result of being unfamiliar with the sign language action, part of the sign language action is not shot, thereby affecting communication between hearing-impaired people. Therefore, the above two manners of shooting the sign language video cannot accurately and completely shoot the sign language video, which not only increases difficulty and complexity of shooting the sign language video, but also reduces efficiency of shooting the sign language video.

Based on the above, to resolve the above problem, an embodiment of this application provides a photographing parameter adjustment method. According to the method, a first image including a shooting object performing a first sign language action in a video may be identified, to obtain a first human body key point of the shooting object corresponding to the first sign language action. Next, second coordinate information of the first human body key point of the shooting object in a case that the shooting object performs the second sign language action is determined through a coordinate prediction model based on coordinate information of the first human body key point of the shooting object corresponding to the first sign language action in the first image and first sign language information used for representing a body pose, an action trajectory, and a facial morphology of the shooting object in a case that the shooting object performs the first sign language action, so as to calculate, based on the second coordinate information, whether the shooting object appears in a photographing range of a camera module in a case that the shooting object performs the second sign language action immediately after the first sign language action. In a case that the second sign language action does not appear in a photographing range of a camera module, the shooting object does not need adjust a position, a photographer does not need to adjust a position of the electronic device, and the photographing parameter can be adjusted based on the second coordinate information, so as to photograph a target image including a second sign language action performed by the shooting object. In this way, a photographing parameter can be adaptively adjusted based on the calculated second coordinate information of the first human body key point of the shooting object in a case that the shooting object performs the second sign language action, thereby ensuring that consecutive sign language actions of the user always appear in a camera picture during video recording without manually adjusting the electronic device by the user, so that processes of shooting the sign language video are simple, efficiency of shooting the sign language video is improved, and a success rate of the sign language video shot by the user is increased.

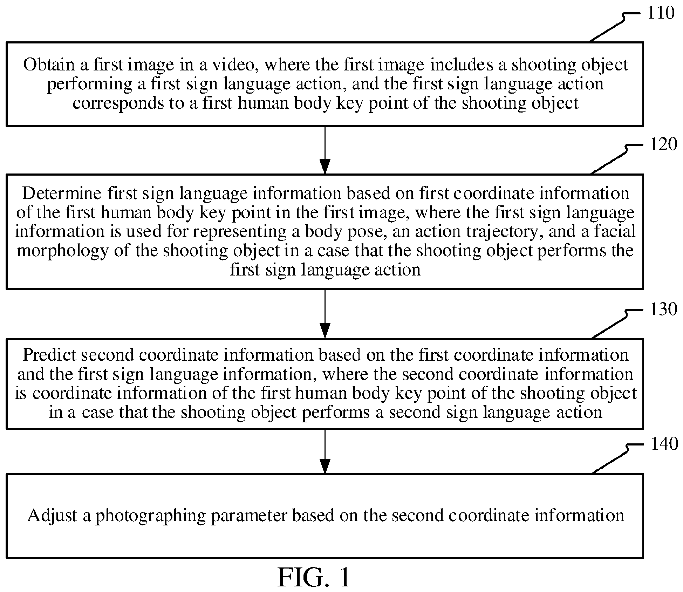

The photographing parameter adjustment method provided in embodiments of this application is described below in detail through specific embodiments and application scenarios with reference to FIG. 1 to FIG. 2.

First, the photographing parameter adjustment method provided in embodiments of this application is described below in detail with reference to FIG. 1.

FIG. 1 is a flowchart of a photographing parameter adjustment method according to an embodiment of this application.

As shown in FIG. 1, the photographing parameter adjustment method provided in this embodiment of this application may be applied to an electronic device. The method may include the following steps:
Step 110: Obtain a first image in a video, where the first image includes a shooting object performing a first sign language action, and the first sign language action corresponds to a first human body key point of the shooting object. Step 120: Determine first sign language information based on first coordinate information of the first human body key point in the first image, where the first sign language information is used for representing a body pose, an action trajectory, and a facial morphology of the shooting object in a case that the shooting object performs the first sign language action. Step 130: Predict second coordinate information based on the first coordinate information and the first sign language information, where the second coordinate information is coordinate information of the first human body key point of the shooting object in a case that the shooting object performs a second sign language action. Step 140: Adjust a photographing parameter based on the second coordinate information.

In this way, the first image of the shooting object performing the first sign language action in the video may be identified, to obtain the first human body key point of the shooting object corresponding to the first sign language action. Next, the first sign language information used for representing the body pose, the action trajectory, and the facial morphology of the shooting object in a case that the shooting object performs the first sign language action is determined based on the first coordinate information of the first human body key point in the first image. Then the second coordinate information of the first human body key point of the shooting object in a case that the shooting object performs the second sign language action is predicted based on the first coordinate information and the first sign language information, and whether the shooting object appears in a photographing range of a camera module in a case that the shooting object performs the second sign language action immediately after the first sign language action is calculated based on the second coordinate information. In a case that the second sign language action does not appear in a photographing range of a camera module, the shooting object does not need adjust a position, a photographer does not need to adjust a position of the electronic device, and the photographing parameter can be adjusted based on the second coordinate information, so as to photograph a target image including a second sign language action performed by the shooting object. In this way, it can be ensured that the consecutive sign language actions of the user always appear in a camera picture during video recording without manually adjusting the electronic device by the user, so that processes of shooting the sign language video are simple, and efficiency of shooting the sign language video is improved, thereby increasing a success rate of the sign language video shot by the user.

The above steps are described in detail below, which are shown in detail as follows:
First, step 110 is involved. In an example, two first images may be provided, to ensure accuracy of calculating the first sign language information and the second coordinate information of the first human body key point of the shooting object in a case that the shooting object performs the second sign language action.

It should be noted that, before step 120, the first human body key point may be obtained in the following steps. Based on the above, the photographing parameter adjustment method may further include:
identifying the shooting object in the first image, to obtain all human body key points of the shooting object; and
extracting, from all of the human body key points, the first human body key point corresponding to the first sign language action based on first association information of a sign language action and each of the human body key points.

In an example, a first image corresponding to a moment t in currently shot video is obtained, and a first human body key point corresponding to the first sign language action in the first image is identified. For example, 33 trunk key points, 21 left hand key points, and 21 right hand key points are included, and first coordinate information of each of the key point in the first image includes an x-axis coordinate and a y-axis coordinate. Herein, a convolutional neural network (Convolutional Neural Networks, CNN) may be trained by performing a regression task by using the first coordinate information of the first human key point in each first image, to obtain the first human body key point corresponding to the first sign language action and the first coordinate information of the first human body key point in the first image.

Next, step 120 is involved. In this application, considering that the user expresses a sign language action in a plurality of cases such as a hand action, a hand action and a trunk position, a hand action and a neck position, and a hand action and a head position (which specifically is a face position), the first sign language information may be determined through any one or more of the following embodiments, which are respectively described below.

In one or more embodiments, the first human body key point includes N hand key points, the first coordinate information includes hand coordinate information of each of the N hand key points, the first sign language information includes first hand shape information and first relative position information, and N is a positive integer. Based on the above, step 120 may specifically include:
connecting the N hand key points based on the hand coordinate information of each of the N hand key points, to obtain the first hand shape information, where the first hand shape information includes a hand shape contour and a hand pose; and
obtaining first relative position information of hands of the shooting object based on the first hand shape information.

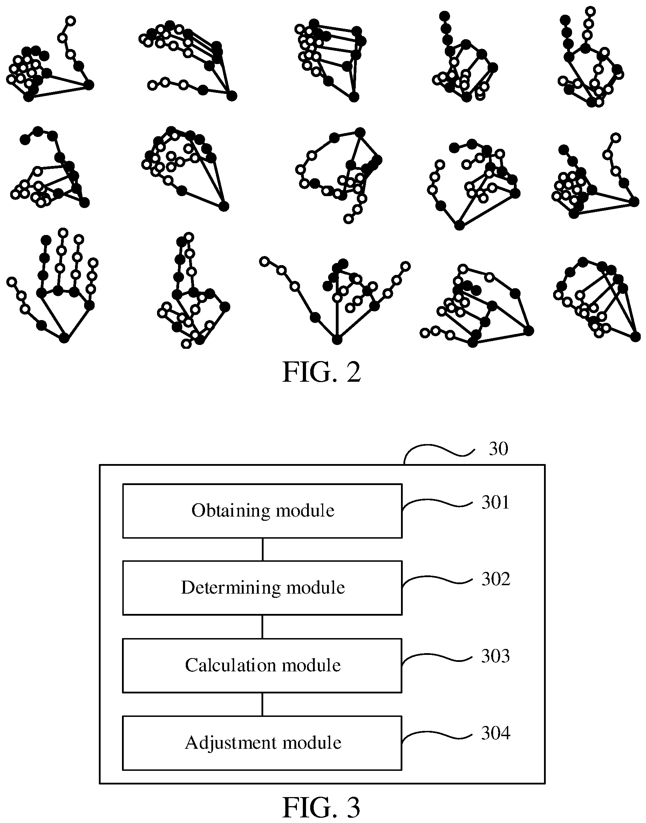

In an example, the first sign language information of the first image is calculated based on x coordinates and y coordinates of the 33 trunk key points, the 21 left hand key points, and the 21 right hand key points identified in the above steps. A total of 51 types of first sign language information are provided in this embodiment of this application, including a hand shape contour of the shooting object, the first relative position information of the hands (for example, two hands) such as a feature of whether both hands are symmetrical, a hand pose such as a single-hand or two-hand feature, a master-hand (any one of the two hands) feature, a feature of whether a master hand is in contact with a mouth, a feature of whether a master hand is in contact with an ear, a feature of whether a master hand is in contact with a forehead, a left hand movement trajectory feature, a right hand movement trajectory feature, a left palm orientation feature, and a right palm orientation feature. As shown in FIG. 2, 15 types of first hand shape information are provided in this embodiment of this application, which are respectively a hand shape A, a hand shape C, a hand shape D, a hand shape I, a hand shape H, a hand shape J, a hand shape O, a hand shape P, a hand shape Q, a hand shape R, a hand shape U, a hand shape X, a hand shape Y, a hand shape NG, a hand shape of a circle formed by touching a forefinger and a thumb, and another hand shape (not shown in the figure) arranged from left to right in sequence. Herein, in this embodiment of this application, the hand shapes are classified through a graph convolutional network (GCN). Inputs of the network is 21 two-dimensional coordinates of a left hand or 21 two-dimensional coordinates of a right hand, and the network outputs a probability distribution of the hand shapes.

Based on the above, how to connect the N hand key points based on the hand coordinate information of each of the N hand key points, to obtain the first hand shape information is described in detail below, which is shown in detail as follows:
Symmetrical two-hand feature: First, an average value of x coordinates of each of 21 pairs of left hand key points and right hand key points is calculated. For example, an average value of a first joint of a thumb is an average value of an x coordinate of a first joint of a left thumb and an x coordinate of a first joint of a right thumb. Then a maximum value and a minimum value of the 21 average values are calculated. In a case that a difference between the maximum value and the minimum value is less than 1/7 of a shoulder width, and a difference of y values of lowest joint points of middle fingers of the left and right hands is less than 1/7 of the shoulder width, it is considered that the two hands are symmetrical.
Single-hand or two-hand feature: It is determined based on whether key points of the two hands are detected.
Master-hand feature: It is determined based on changes in x coordinates and y coordinates of a detected left/right hand and a left/right hand in a historical image.

Feature of whether a master hand is in contact with a lip: Whether an intersection of a straight line formed by each small joint of a palm and a straight line of the lip is within a lip range may be calculated.

Feature of whether a master hand is in contact with an ear: Whether an intersection of a straight line formed by each small joint of a palm and each straight line formed by ear area key points is within an ear range may be calculated.

Feature of whether a master hand is in contact with a forehead: Whether an intersection of a straight line formed by each small joint of a palm and each straight line formed by forehead area key points is within a forehead range may be calculated.

Left hand movement trajectory feature: 8 movement directions may be preset, including upward, right upward, rightward, right downward, downward, left downward, leftward. Change values of x coordinates and y coordinates of 21 key points of a left hand and 21 key points of a previous frame may be classified into the above 8 movement directions, to form 21 features.

Right hand movement trajectory feature: 8 movement directions may be preset, including upward, right upward, rightward, right downward, downward, left downward, leftward. Change values of x coordinates and y coordinates of 21 key points of a right hand and 21 key points of a previous frame may be classified into the above 8 movement directions, to form 21 features.

Left palm orientation feature: 8 palm orientations may be preset, including upward, right upward, rightward, right downward, downward, left downward, leftward. The left palm orientation may be calculated by determining a normal of a plane based on a lowest key point of a left index finger, a lowest key point of a left little finger, and a key point of a left wrist.

Right palm orientation feature: 8 palm orientations may be preset, including upward, right upward, rightward, right downward, downward, left downward, leftward. The right palm orientation may be calculated by determining a normal of a plane based on a lowest key point of a right index finger, a lowest key point of a right little finger, and a key point of a right wrist.

In another or more embodiments, the human body key point further includes a target area key point of a target area of a human body, the target area includes at least one of a head, a trunk, and a neck, the first coordinate information further includes target area coordinate information corresponding to the target area key point, and the first sign language information includes second relative position information. Based on the above, step 120 may specifically include:
obtaining second relative position information of the two hands and the target area based on the target area coordinate information and the hand coordinate information of each hand key point.

It should be noted that, in some specific scenarios, the head may be accurate to a mouth, an ear, a forehead, an eyebrow, an eye a nose, or the like, to ensure accuracy of obtaining the first sign language information.

In still another or more embodiments, the human body key point further includes M mouth key points, the first coordinate information further includes mouth coordinate information of each of the M mouth key points, and the first sign language information includes first mouth shape information and a first pronunciation factor. Based on the above, step 120 may specifically include:
connecting the M mouth key points based on the mouth coordinate information of each of the M mouth key points, to obtain the first mouth shape information, where the first mouth shape information corresponds to first hand shape information at a same moment; and
obtaining the first pronunciation factor corresponding to the first mouth shape information based on third association information of mouth shape information and a pronunciation factor.

In an example, in addition to a gesture, the first sign language information further includes cooperation between the gesture and a face (specifically, the mouth), to obtain more accurate sign language information. Herein, in this embodiment of this application, the first sign language information is obtained more precisely based on the sign language itself in combination with a mouth shape and the pronunciation factor (that is, a facial change in a case that the user pronounces, for example, a pronunciation factor "o" has facial details different from that a pronunciation factor "a"), to accurately predict the coordinate information of the first human body key point at the second sign language action immediately after the first sign language action.

Furthermore, step 130 is involved. The following at least two manners of determining the second coordinate information are provided in this embodiment of this application, which are shown in detail as follows:
In one or more possible embodiments, step 130 may specifically include:
obtaining a first human body action corresponding to the first coordinate information based on the first coordinate information of the first human body key point in the first image;
obtaining a first word corresponding to the first human body action based on second association information of a human body action and a word; and
determining coordinate information of a preset action trajectory corresponding to the first word as a second coordinate action.

In an example, in a case that a meaning of the first human body action determined based on the first coordinate information is "twinkling", a word collocated with the "twinkling", for example, a twinkling star, may be obtained. In this case, a "star" may be used as the first word, and coordinate information of a preset action trajectory corresponding to the "star" is determined as the second coordinate action.

In another or more possible embodiments, in this embodiment of this application, the second coordinate information may be determined through a coordinate prediction model. Based on the above, step 130 may specifically include:
inputting the first coordinate information and the first sign language information into a coordinate prediction model, to obtain second coordinate information, where
the second coordinate information is coordinate information of the first human body key point of the shooting object in a case that the shooting object performs a second sign language action, and the coordinate prediction model is trained based on a second human body key point and second sign language information of a second image.

Specifically, in an example, the coordinate prediction model may include at least one of a first sub-model and a second sub-model. Based on the above, the second coordinate information may be described based on different prediction models, which is shown in detail as follows:
In a possible embodiment, the first image includes R first images, the first coordinate information includes coordinate information of a first human body key point of each of the R first images, a coordinate prediction model includes a first sub-model, the second coordinate information includes first target coordinate information, and R is a positive integer greater than 1. Based on the above, step 130 may specifically include:
inputting the coordinate information of the first human body key point of each first image into the first sub-model, and calculating a motion acceleration of the first human body key point in the first sign language action; and
predicting second target coordinate information in a first human body key point of the shooting object based on the motion acceleration and first coordinate information of a first human body key point of an i^{th} first image in a case that the shooting object performs the second sign language action, where the i^{th} first image is a last image among the R first images.

In an example, based on displacement changes of an x coordinate and a y coordinate of an i^{th} key point in a t^{th} frame and an x coordinate and a y coordinate of an i^{th} key point in a (t-1)^{th} frame, it may be obtained that a motion speed of the x coordinate of the i^{th} key point in the t^{th} frame is |*x_{t,i} - x*_{*t-*1*,i*}|, a motion speed of the y coordinate is |*y_{t,i} - y*_{*t-*1,*i*}|, and it may be predicted that an acceleration of the x coordinate of the i^{th} key point in the a frame is *θ_{x,t,i} = αᵢx_{t,i} +* (1 *- αᵢ*)*θ*_{*x,t-*1,*i*}, and similarly, an acceleration of the y coordinate in the next frame is *θ_{y,t,i} = αᵢy_{t,i} +* (1 *- αᵢ*)*^{θ}*_{*y,t-*1}*_{,i}.*

Next, a coordinate (*x*_{*t+*1*,i*}¹*, y*_{*t+*1*,i*}¹) *=* (*x_{t,i} + θ_{x,t,i}, y_{t,i} + θ_{y,t,i}*) of the i^{th} key point at a next moment is calculated based on a position (*x_{t,i}, y_{t,i}*) of the i^{th} key point at a moment t. An acceleration is a harmonic average of historical speeds, and a parameter α = 0.9 may be specified based on experience, which indicates that a most recent speed is considered in 90% and a harmonic mean of the historical speed before the present is considered in 10% of cases in a case that the acceleration is predicted. In addition, α may alternatively be used as a learnable parameter. α is updated through gradient descent by using a loss function of a most downstream regression task, and finally an optimal value of the parameter is learned after entire network training is completed.

In another possible embodiment, the coordinate prediction model includes a second sub-model, and the second coordinate information includes the second target coordinate information. Based on the, step 130 may specifically include:
inputting the first sign language information into the first sub-model, and calculating target semantic information of the photographing object in a case that shooting object performs the first sign language action;
obtaining, based on a fourth association relationship between semantic information and an action trajectory, a target action trajectory corresponding to the semantic information; and
determining the second target coordinate information of the first human body key point of the shooting object based on a position of the first sign language action in the target action trajectory in a case that the shooting object performs the second sign language action connected to the first sign language action.

In an example, timing data of each key point from a moment 0 to a moment t is modeled by using a timing neural network such as a long short-term memory network (LSTM), to output an x coordinate and a y coordinate at a moment t+1. Herein, in this embodiment of this application, the first sign language information of the first sign language action is combined, and the first sign language information is strongly correlated with a movement trajectory of a sign language, so that prediction precision can be improved. Each first key point has 51 sign language features and 2 pieces of first coordinate information in each time step. After the 53 features are inputted into the LSTM network, and all of the timing data from the moment 0 to the moment t are input into the model, a vector representation H ∈ *R*^{(1,*hidden size*)} of a last hidden layer of the model is taken, and the vector representation is mapped to a two-dimensional coordinate through a matrix multiplication HW. A dimension of W is W ∈ *R*^{(*hidden size*,2)}, and an x coordinate and a y coordinate at the moment t+1, that is, a moment at which the second image is photographed, are obtained, and are detonated as (*x*_{*t+*1*,i*} ²*, y*_{*t+*1*,i*}²) *= LSTM*(*x*₀*, y*₀*, ··· xₜ, yₜ*; Θ)*.*

In still another possible embodiment, the coordinate prediction model may include a first sub-model, and may further include a second sub-model. Based on the above, step 130 may specifically include:
calculating an average coordinate of the first target coordinate information and the second target coordinate information as the second coordinate information based on the first target coordinate information and the second target coordinate information obtained in the above two possible embodiments.

In an example, merging is performed through an adjustment coefficient β, that is, *x*_{*t*+1,}*ᵢ = βx*_{*t+*1*,i*}¹ + (1 *- β*)*x*_{*t+*1*,i*}² and *y*_{*t+*1,}*ᵢ = βy*_{*t+*1*,i*}¹ + (1 *- β*)*y*_{*t+*1,*i*}². The parameter β may be set to 0.5 based on experience, or may be used as a learnable parameter of the coordinate prediction network. An MSE loss function is solved by using a coordinate merged through the parameter and a real coordinate, and an optimal solution of the parameter is learned by using a gradient descent method.

Herein, a sequence of obtaining the first target coordinate information and the second target coordinate information is not limited in this embodiment of this application. In other words, in this embodiment, the coordinate prediction model may calculate the first target coordinate information or the second target coordinate information first. Certainly, the two may be calculated simultaneously.

Then step 140 is involved. Step 140 is described below based on different implementation scenarios, which is shown in detail as follows:
In one or more possible embodiments, the photographing parameter includes a photographing position of a photographing module. Based on the above, step 140 may specifically include:
controlling, based on the second coordinate information, the photographing module to move to a target photographing position based on a movement direction of a movement control line in a case that the second coordinate information exceeds a first photographing range for photographing the first image.

In this way, the electronic device photographs the target image based on the target photographing position.

In another or more possible embodiments, in case of a blurred photographing picture as a result of an excessively small distance between the shooting object and a lens of the electronic device, a position of the camera module does not need to be adjusted, only a depth-of-field parameter of the camera module needs to be adjusted. In other words, the second coordinate information satisfies a preset photographing condition, including that the second coordinate information represents that a first distance between the shooting object and the photographing module is less than or equal to a preset threshold, and the photographing parameter includes a depth-of-field parameter. Based on the above, step 140 may specifically include:
obtaining a first depth-of-field parameter corresponding to the first distance based on fifth association information of a distance and a depth of field; and
adjusting an initial depth-of-field parameter for photographing the first image to the first depth-of-field parameter, to photograph the target image based on the first depth-of-field parameter.

In an example, an x-axis range of the camera module is in a range from 0 to a maximum value max x, and a y-axis range of a camera is in a range from 0 to a maximum value max y. In a case that a predicted coordinate of a key point is not in the range at the moment t+1, a focal length is adjusted or a wide-angle camera are enabled, to ensure that the human body and a hand in the next frame still appear in the camera range.

In addition, in a possible embodiment, before step 140, the photographing parameter adjustment method may further include:
prompting the user whether the sign language action is within the photographing range of the camera in a manner of broadcasting prompt audio or displaying prompt text information.

In an example, in a case that it is identified that a body or a hand of the user is about to slide out of the camera range in the next frame, the electronic device may display a text on a screen to prompt the user or a mobile phone makes a prompt tone to prompt the user, to warn the user to pay attention to the distance from the camera.

The photographing parameter adjustment method provided in embodiments of this application may be performed by a photographing parameter adjustment apparatus. In this embodiment of this application, a photographing parameter adjustment apparatus provided in embodiments of this application is described by using an example in which the photographing parameter adjustment apparatus performs the photographing parameter adjustment method.

Based on the same inventive concept, this application further provides a photographing parameter adjustment apparatus. Specifically, a description is provided in detail with reference to FIG. 3.

FIG. 3 is a schematic structural diagram of a photographing parameter adjustment apparatus according to an embodiment of this application.

As shown in FIG. 3, a photographing parameter adjustment apparatus 30 is applied to an electronic device, and may specifically include:
an obtaining module 301, configured to obtain a first image in a video, where the first image includes a shooting object performing a first sign language action, and the first sign language action corresponds to a first human body key point of the shooting object;
a determining module 302, configured to determine first sign language information based on first coordinate information of the first human body key point in the first image, where the first sign language information is used for representing a body pose, an action trajectory, and a facial morphology of the shooting object in a case that the shooting object performs the first sign language action;
a calculation module 303, configured to predict second coordinate information based on the first coordinate information and the first sign language information, where the second coordinate information is coordinate information of the first human body key point of the shooting object in a case that the shooting object performs a second sign language action; and
an adjustment module 304, configured to adjust a photographing parameter based on the second coordinate information.

The photographing parameter adjustment apparatus 30 is described below in detail, which is shown in detail as follows:
In one or more possible embodiments, in a case that the first human body key point includes N hand key points, the first coordinate information includes hand coordinate information of each of the N hand key points, the first sign language information includes first hand shape information and first relative position information, and N is a positive integer, the determining module 302 provided in this embodiment of this application may be further configured to: connect the N hand key points based on the hand coordinate information of each of the N hand key points, to obtain the first hand shape information, where the first hand shape information includes a hand shape contour and a hand pose; and
obtain first relative position information of hands of the shooting object based on the first hand shape information.

In another or more possible embodiments, in a case that the human body key point further includes a target area key point of a target area of a human body, the target area includes at least one of a head, a trunk, and a neck, the first coordinate information further includes target area coordinate information corresponding to the target area key point, and the first sign language information includes second relative position information, the determining module 302 provided in this embodiment of this application may be further configured to obtain second relative position information of the two hands and the target area based on the target area coordinate information and the hand coordinate information of each hand key point.

In still another or more possible embodiments, in a case that the human body key point further includes M mouth key points, the first coordinate information further includes mouth coordinate information of each of the M mouth key points, and the first sign language information includes first mouth shape information and a first pronunciation factor, the determining module 302 provided in this embodiment of this application may be further configured to: connect the M mouth key points based on the mouth coordinate information of each of the M mouth key points, to obtain the first mouth shape information, where the first mouth shape information corresponds to first hand shape information at a same moment; and
obtain the first pronunciation factor corresponding to the first mouth shape information based on third association information of mouth shape information and a pronunciation factor.

In yet another or more possible embodiments, the calculation module 303 provided in this embodiment of this application may be further configured to: obtain a first human body action corresponding to the first coordinate information based on the first coordinate information of the first human body key point in the first image;
obtain a first word corresponding to the first human body action based on second association information of a human body action and a word; and
determine coordinate information of a preset action trajectory corresponding to the first word as a second coordinate action.

In yet another or more possible embodiments, in a case that the first image includes R first images, the first coordinate information includes coordinate information of a first human body key point of each of the R first images, a coordinate prediction model includes a first sub-model, the second coordinate information includes first target coordinate information, R is a positive integer greater than 1, and the coordinate prediction model is trained based on a second human body key point and second sign language information of a second image, the calculation module 303 provided in this embodiment of this application may be further configured to: input the coordinate information of the first human body key point of each first image into the first sub-model, and calculate a motion acceleration of the first human body key point in the first sign language action; and
predict second target coordinate information of a first human body key point of the shooting object based on the motion acceleration and first coordinate information of a first human body key point of an i^{th} first image in a case that the shooting object performs the second sign language action, where the i^{th} first image is a last image among the R first images.

In yet another or more possible embodiments, in a case that the coordinate prediction model includes a second sub-model, and the second coordinate information includes the second target coordinate information, the calculation module 303 provided in this embodiment of this application may be further configured to: input the first sign language information into the first sub-model, and calculate target semantic information of the photographing object in a case that shooting object performs the first sign language action;
obtain, based on a fourth association relationship between semantic information and an action trajectory, a target action trajectory corresponding to the semantic information; and
determine the second target coordinate information of the first human body key point of the shooting object based on a position of the first sign language action in the target action trajectory in a case that the shooting object performs the second sign language action connected to the first sign language action.

In yet another or more possible embodiments, in a case that the photographing parameter includes a photographing position of a photographing module, the adjustment module 304 provided in this embodiment of this application may be s further configured to control, based on the second coordinate information, the photographing module to move to a target photographing position based on a movement direction of a movement control line in a case that the second coordinate information exceeds a first photographing range for photographing the first image.

In yet another or more possible embodiments, in a case that the photographing parameter includes a depth-of-field parameter, and the second coordinate information represents that a first distance between the shooting object and the photographing module is less than or equal to a preset threshold, the adjustment module 304 provided in this embodiment of this application may be further configured to: obtain a first depth-of-field parameter corresponding to the first distance based on fifth association information of a distance and a depth of field; and
adjust an initial depth-of-field parameter for photographing the first image to the first depth-of-field parameter.

The photographing parameter adjustment apparatus in this embodiment of this application may be an electronic device, or may be a component in the electronic device, for example, an integrated circuit or a chip. The electronic device may be a terminal, or may be another device other than the terminal. In an example, the electronic device may be a mobile phone, a tablet computer, a notebook computer, a palm computer, an on-board electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like, or may be a server, a network attached storage (Network Attached Storage, NAS), a personal computer (personal computer, PC), a television (television, TV), a teller machine, an automated machine, or the like. This is not specifically limited in this embodiment of this application.

The photographing parameter adjustment apparatus in this embodiment of this application may be an apparatus having an operating system. The operating system may be Android (Android), IOS, or another possible operating system. This is not specifically limited in this embodiment of this application.

The photographing parameter adjustment apparatus provided in this embodiment of this application can implement the processes implemented in the method embodiments of FIG. 1 to FIG. 2, and achieve the same technical effects. To avoid repetition, details are not described herein.

Based on the above, according to the photographing parameter adjustment apparatus provided in embodiments of this application, the first image of the shooting object performing the first sign language action in the video may be identified, to obtain the first human body key point of the shooting object corresponding to the first sign language action. Next, the first sign language information used for representing the body pose, the action trajectory, and the facial morphology of the shooting object in a case that the shooting object performs the first sign language action is determined based on the first coordinate information of the first human body key point in the first image. Then the second coordinate information of the first human body key point of the shooting object in a case that the shooting object performs the second sign language action is predicted based on the first coordinate information and the first sign language information, and whether the shooting object appears in a photographing range of a camera module in a case that the shooting object performs the second sign language action immediately after the first sign language action is calculated based on the second coordinate information. In a case that the second sign language action does not appear in a photographing range of a camera module, the shooting object does not need adjust a position, a photographer does not need to adjust a position of the electronic device, and the photographing parameter can be adjusted based on the second coordinate information, so as to photograph a target image including a second sign language action performed by the shooting object. In this way, it can be ensured that the consecutive sign language actions of the user always appear in a camera picture during video recording without manually adjusting the electronic device by the user, so that processes of shooting the sign language video are simple, and efficiency of shooting the sign language video is improved, thereby increasing a success rate of the sign language video shot by the user.

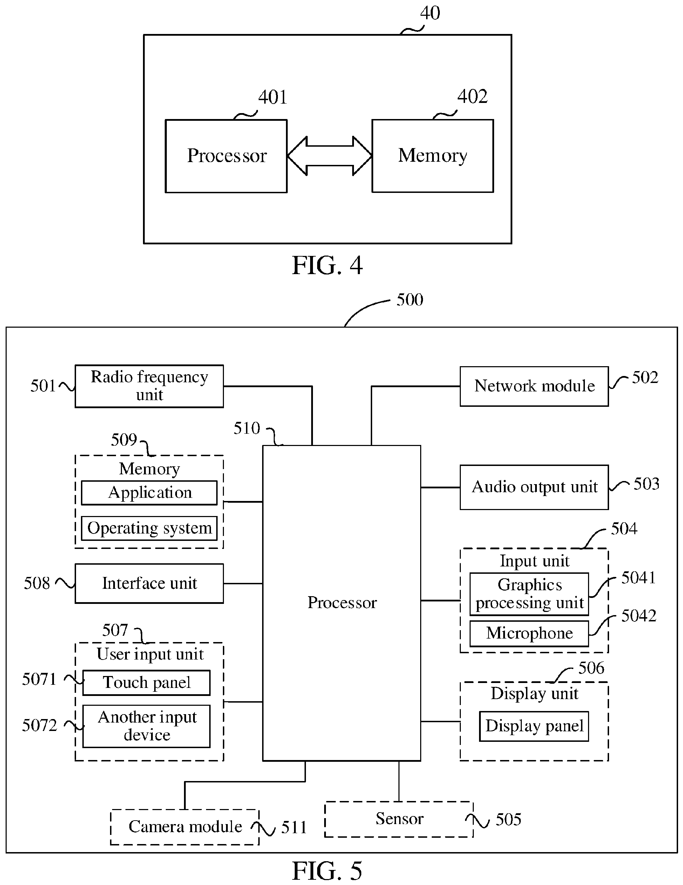

Optionally, as shown in FIG. 4, an embodiment of this application further provides an electronic device 40, including a processor 401 and a memory 402. The memory 402 stores a program or instructions executable by the processor 401. The program or the instructions, when executed by the processor 401, implement the steps of the above photographing parameter adjustment method embodiment are implemented, and can achieve the same technical effects. To avoid repetition, details are not described herein.

It should be noted that the electronic device in this embodiment of this application includes the above mobile electronic device and a non-mobile electronic device.

FIG. 5 is a schematic diagram of a hardware structure of an electronic device according to an embodiment of this application.

An electronic device 500 includes but is not limited to components such as a radio frequency unit 501, a network module 502, an audio output unit 503, an input unit 504, a sensor 505, a display unit 506, a user input unit 507, an interface unit 508, a memory 509, a processor 510, and a camera module 511.

A person skilled in the art may understand that the electronic device 500 may further include a power supply (such as a battery) that supplies power to the components. The power supply may be logically connected to the processor 510 through a power management system, thereby implementing functions such as management of charging, discharging, and power consumption through the power management system. The electronic device structure shown in FIG. 5 constitutes no limitation on the electronic device, and the electronic device may include more or fewer components than those shown in the figure, or some merged components, or different component arrangements. Details are not described herein.

In this embodiment of this application, the processor 510 is configured to obtain a first image in a video, where the first image includes a shooting object performing a first sign language action, and the first sign language action corresponds to a first human body key point of the shooting object. The processor 510 is further configured to determine first sign language information based on first coordinate information of the first human body key point in the first image, where the first sign language information is used for representing a body pose, an action trajectory, and a facial morphology of the shooting object in a case that the shooting object performs the first sign language action. The processor 510 is further configured to predict second coordinate information based on the first coordinate information and the first sign language information, where the second coordinate information is coordinate information of the first human body key point of the shooting object in a case that the shooting object performs a second sign language action. The processor 510 is further configured to adjust a photographing parameter based on the second coordinate information.

In one or more possible embodiments, in a case that the first human body key point includes N hand key points, the first coordinate information includes hand coordinate information of each of the N hand key points, the first sign language information includes first hand shape information and first relative position information, and N is a positive integer, the processor 510 provided in this embodiment of this application may be specifically configured to: connect the N hand key points based on the hand coordinate information of each of the N hand key points, to obtain the first hand shape information, where the first hand shape information includes a hand shape contour and a hand pose; and
obtain first relative position information of hands of the shooting object based on the first hand shape information.

In another or more possible embodiments, in a case that the human body key point further includes a target area key point of a target area of a human body, the target area includes at least one of a head, a trunk, and a neck, the first coordinate information further includes target area coordinate information corresponding to the target area key point, and the first sign language information includes second relative position information, the processor 510 provided in this embodiment of this application may be specifically configured to obtain second relative position information of the two hands and the target area based on the target area coordinate information and the hand coordinate information of each hand key point.

In still another or more possible embodiments, in a case that the human body key point further includes M mouth key points, the first coordinate information further includes mouth coordinate information of each of the M mouth key points, and the first sign language information includes first mouth shape information and a first pronunciation factor, the processor 510 provided in this embodiment of this application may be specifically configured to: connect the M mouth key points based on the mouth coordinate information of each of the M mouth key points, to obtain the first mouth shape information, where the first mouth shape information corresponds to first hand shape information at a same moment; and
obtain the first pronunciation factor corresponding to the first mouth shape information based on third association information of mouth shape information and a pronunciation factor.

In yet another or more possible embodiments, the processor 510 provided in this embodiment of this application may be specifically configured to: obtain a first human body action corresponding to the first coordinate information based on the first coordinate information of the first human body key point in the first image;
obtain a first word corresponding to the first human body action based on second association information of a human body action and a word; and
determine coordinate information of a preset action trajectory corresponding to the first word as a second coordinate action.

In yet another or more possible embodiments, in a case that the first image includes R first images, the first coordinate information includes coordinate information of a first human body key point of each of the R first images, a coordinate prediction model includes a first sub-model, the second coordinate information includes first target coordinate information, R is a positive integer greater than 1, and the coordinate prediction model is trained based on a second human body key point and second sign language information of a second image, the processor 510 provided in this embodiment of this application may be specifically configured to: input the coordinate information of the first human body key point of each first image into the first sub-model, and calculate a motion acceleration of the first human body key point in the first sign language action; and
predict second target coordinate information of a first human body key point of the shooting object based on the motion acceleration and first coordinate information of a first human body key point of an i^{th} first image in a case that the shooting object performs the second sign language action, where the i^{th} first image is a last image among the R first images.

In yet another or more possible embodiments, in a case that the coordinate prediction model includes a second sub-model, and the second coordinate information includes the second target coordinate information, the processor 510 provided in the embodiments of this application may be specifically configured to: input the first sign language information into the first sub-model, and calculate target semantic information of the photographing object in a case that shooting object performs the first sign language action;
obtain, based on a fourth association relationship between semantic information and an action trajectory, a target action trajectory corresponding to the semantic information; and
determine the second target coordinate information of the first human body key point of the shooting object based on a position of the first sign language action in the target action trajectory in a case that the shooting object performs the second sign language action connected to the first sign language action.

In yet another or more possible embodiments, in a case that the photographing parameter includes a photographing position of a photographing module, the processor 510 provided in this embodiment of this application may be specifically configured to control, based on the second coordinate information, the photographing module to move to a target photographing position based on a movement direction of a movement control line in a case that the second coordinate information exceeds a first photographing range for photographing the first image.

In yet another or more possible embodiments, in a case that the photographing parameter includes a depth-of-field parameter, and the second coordinate information represents that a first distance between the shooting object and the photographing module is less than or equal to a preset threshold, the processor 510 provided in this embodiment of this application may be specifically configured to: obtain a first depth-of-field parameter corresponding to the first distance based on fifth association information of a distance and a depth of field; and
adjust an initial depth-of-field parameter for photographing the first image to the first depth-of-field parameter.

It should be understood that the input unit 504 may include a graphics processing unit (Graphics Processing Unit, GPU) 5041 and a microphone 5042. The graphics processing unit 5041 processes image data of a static image or a video obtained by an image capture apparatus (for example, a camera) in a video capture mode or an image capture mode. The display unit 506 may include a photographing panel. The photographing panel may be configured in a form such as a liquid crystal camera or an organic light-emitting diode. The user input unit 507 includes at least one of a touch panel 5071 and another input device 5072. The touch panel 5071 is also referred to as a touchscreen. The touch panel 5071 may include two parts: a touch detection apparatus and a touch camera. The another input device 5072 may include but is not limited to a physical keyboard, a function button (such as a volume display button or a switch button), a trackball, a mouse, and a joystick. Details are not described herein.

The memory 509 may be configured to store a software program and various data. The memory 509 may mainly include a first storage area for storing a program or instructions and a second storage area for storing data. The first storage area may store an operating system, an application or instructions required for at least one function (for example, a sound playback function and an image playback function), and the like. In addition, the memory 509 may include a volatile memory or a non-volatile memory, or the memory 509 may include both the volatile memory and the non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DR RAM). The memory 509 in this embodiment of this application includes but is not limited to these and any other suitable types of memories. The memory 509 may include a program storage area and a data storage area. The program storage area may store an operating system, an application required by at least one function (for example, a sound playback function and an image display function), and the like. The data storage area may store data (for example, audio data and a phone book) created based on use of a mobile terminal. In addition, the memory 509 may include a highspeed random access memory, and may further include a non-volatile memory, such as at least one magnetic disk storage device, a flash memory, or another volatile solid-state storage device.

The processor 510 runs or executes the software program and/or the module stored in the memory 509, and invokes data stored in the memory 509. The processor 510 may include one or more processing units. Optionally, an application processor and a modem processor are integrated into the processor 510. The application processor is mainly configured to process operations related to an operating system, a user interface, an application, and the like. The modem processor such as a baseband processor is mainly configured to process a wireless photographing signal. It may be understood that the above modem processor may alternatively not be integrated into the processor 510.

An embodiment of this application further provides a readable storage medium, storing a program or instructions. The program or the instructions, when executed by a processor, implement the processes of the above photographing parameter adjustment method embodiment, and can achieve the same technical effects. To avoid repetition, details are not described herein.

The processor is a processor in the electronic device in the above embodiment. The readable storage medium includes a computer-readable storage medium, such as a computer read-only memory ROM, a random access memory RAM, a magnetic disk, or an optical disc.

In addition, an embodiment of this application further provides a chip, including a processor and a display interface. The display interface is coupled to the processor. The processor is configured to run a program or instructions, to implement the processes of the above photographing parameter adjustment method embodiment, and can achieve the same technical effects. To avoid repetition, details are not described herein.

It should be understood that the chip in this embodiment of this application may also be referred to as a system level chip, a system chip, a chip system, a system on chip, or the like.

An embodiment of this application provides a computer program product, stored in a storage medium. The program product is executed by at least one processor to implement the processes of the above photographing parameter adjustment method embodiment, and can achieve the same technical effects. To avoid repetition, details are not described herein.

It should be noted that the term "comprise", "include" or any other variant herein are intended to encompass non-exclusive inclusion, so that a process, a method, an article, or an apparatus including a series of elements not only includes those elements, but also includes another element not listed explicitly, or includes intrinsic elements for the process, the method, the article, or the apparatus. Without any further limitation, an element defined by the phrase "include one ..." does not exclude existence of an additional same element in the process, the method, the article, or the apparatus that includes the element.

In addition, it should be noted that the scope of the method and the apparatus in the implementations of this application is not limited to function execution in the order shown or discussed, and may further include function execution in a substantially simultaneous manner or in a reverse order based on the involved functions. For example, the described method may be performed in an order different from the described order, and various steps may also be added, omitted, or combined. In addition, features described with reference to some examples may be combined in another example.

According to the descriptions of the above implementations, a person skilled in the art may clearly learn that the above method embodiment may be implemented by software with a necessary universal hardware platform, or may be implemented by hardware. However, in many cases, the software with a necessary universal hardware platform is a preferred implementation. Based on such an understanding, the technical solutions of this application, in essence, or a part contributing to the prior art may be embodied in a form of a computer software product. The computer software product is stored in a storage medium (such as a ROM/RAM, a magnetic disk, or an optical disc), including a plurality of instructions for causing a terminal (which may be a mobile phone, a computer, a server, a network device, or the like) to perform the method in embodiments of this application.

Although embodiments of this application are described above with reference to the drawings, this application is not limited to the above specific implementations. The above specific implementations are illustrative rather than restrictive. With the enlightenment of this application, a person of ordinary skill in the art may make many forms without departing from the concept of this application and the protection scope of the claims. These forms fall within the protection of this application.

## Claims

1. A photographing parameter adjustment method, comprising:
obtaining a first image in a video, wherein the first image comprises a shooting object performing a first sign language action, and the first sign language action corresponds to a first human body key point of the shooting object;
determining first sign language information based on first coordinate information of the first human body key point in the first image, wherein the first sign language information is used for representing a body pose, an action trajectory, and a facial morphology of the shooting object in a case that the shooting object performs the first sign language action;
predicting second coordinate information based on the first coordinate information and the first sign language information, wherein the second coordinate information is coordinate information of the first human body key point of the shooting object in a case that the shooting object performs a second sign language action; and
adjusting a photographing parameter based on the second coordinate information.

2. The method according to claim 1, wherein the first human body key point comprises N hand key points, the first coordinate information comprises hand coordinate information of each of the N hand key points, the first sign language information comprises first hand shape information and first relative position information, and N is a positive integer; and
the determining first sign language information based on first coordinate information of the first human body key point in the first image comprises:
connecting the N hand key points based on the hand coordinate information of each of the N hand key points, to obtain the first hand shape information, wherein the first hand shape information comprises a hand shape contour and a hand pose; and
obtaining first relative position information of hands of the shooting object based on the first hand shape information.

3. The method according to claim 2, wherein the human body key point further comprises a target area key point of a target area of a human body, the target area comprises at least one of a head, a trunk, and a neck, the first coordinate information further comprises target area coordinate information corresponding to the target area key point, and the first sign language information comprises second relative position information; and
the determining first sign language information based on first coordinate information of the first human body key point in the first image comprises:
obtaining second relative position information of the two hands and the target area based on the target area coordinate information and the hand coordinate information of each hand key point.

4. The method according to claim 2, wherein the human body key point further comprises M mouth key points, the first coordinate information further comprises mouth coordinate information of each of the M mouth key points, and the first sign language information comprises first mouth shape information and a first pronunciation factor; and
the determining first sign language information based on first coordinate information of the first human body key point in the first image comprises:
connecting the M mouth key points based on the mouth coordinate information of each of the M mouth key points, to obtain the first mouth shape information, wherein the first mouth shape information corresponds to first hand shape information at a same moment; and
obtaining the first pronunciation factor corresponding to the first mouth shape information based on third association information of mouth shape information and a pronunciation factor.

5. The method according to claim 1, wherein the predicting second coordinate information based on the first coordinate information and the first sign language information comprises:
obtaining a first human body action corresponding to the first coordinate information based on the first coordinate information of the first human body key point in the first image;
obtaining a first word corresponding to the first human body action based on second association information of a human body action and a word; and
determining coordinate information of a preset action trajectory corresponding to the first word as a second coordinate action.

6. The method according to claim 1, wherein the first image comprises R first images, the first coordinate information comprises coordinate information of a first human body key point of each of the R first images, a coordinate prediction model comprises a first sub-model, the second coordinate information comprises first target coordinate information, R is a positive integer greater than 1, and the coordinate prediction model is trained based on a second human body key point and second sign language information of a second image; and
the predicting second coordinate information based on the first coordinate information and the first sign language information comprises:
inputting the coordinate information of the first human body key point of each first image into the first sub-model, and calculating a motion acceleration of the first human body key point in the first sign language action; and
predicting second target coordinate information of a first human body key point of the shooting object based on the motion acceleration and first coordinate information of a first human body key point of an i^{th} first image in a case that the shooting object performs the second sign language action, wherein the i^{th} first image is a last image among the R first images.

7. The method according to claim 6, wherein the coordinate prediction model comprises a second sub-model, and the second coordinate information comprises the second target coordinate information; and
the inputting the first coordinate information and the first sign language information into a coordinate prediction model, to obtain second coordinate information comprises:
inputting the first sign language information into the first sub-model, and calculating target semantic information of the photographing object in a case that shooting object performs the first sign language action;
obtaining, based on a fourth association relationship between semantic information and an action trajectory, a target action trajectory corresponding to the semantic information; and
determining the second target coordinate information of the first human body key point of the shooting object based on a position of the first sign language action in the target action trajectory in a case that the shooting object performs the second sign language action connected to the first sign language action.

8. The method according to claim 1, wherein the photographing parameter comprises a photographing position of a photographing module; and the adjusting a photographing parameter based on the second coordinate information comprises:
controlling, based on the second coordinate information, the photographing module to move to a target photographing position based on a movement direction of a movement control line in a case that the second coordinate information exceeds a first photographing range for photographing the first image.

9. The method according to claim 1, wherein the photographing parameter comprises a depth-of-field parameter; and the adjusting a photographing parameter based on the second coordinate information comprises:
obtaining, in a case that the second coordinate information represents that a first distance between the shooting object and the photographing module is less than or equal to a preset threshold, a first depth-of-field parameter corresponding to the first distance based on fifth association information of a distance and a depth of field; and
adjusting an initial depth-of-field parameter for photographing the first image to the first depth-of-field parameter.

10. A photographing parameter adjustment apparatus, comprising:
an obtaining module, configured to obtain a first image in a video, wherein the first image comprises a shooting object performing a first sign language action, and the first sign language action corresponds to a first human body key point of the shooting object;
a determining module, configured to determine first sign language information based on first coordinate information of the first human body key point in the first image, wherein the first sign language information is used for representing a body pose, an action trajectory, and a facial morphology of the shooting object in a case that the shooting object performs the first sign language action;
a calculation module, configured to predict second coordinate information based on the first coordinate information and the first sign language information, wherein the second coordinate information is coordinate information of the first human body key point of the shooting object in a case that the shooting object performs a second sign language action; and
an adjustment module, configured to adjust a photographing parameter based on the second coordinate information.

11. The apparatus according to claim 10, wherein in a case that the first human body key point comprises N hand key points, the first coordinate information comprises hand coordinate information of each of the N hand key points, the first sign language information comprises first hand shape information and first relative position information, and N is a positive integer, the determining module is further configured to: connect the N hand key points based on the hand coordinate information of each of the N hand key points, to obtain the first hand shape information, wherein the first hand shape information comprises a hand shape contour and a hand pose; and obtain first relative position information of hands of the shooting object based on the first hand shape information.

12. The apparatus according to claim 11, wherein in a case that the human body key point further comprises a target area key point of a target area of a human body, the target area comprises at least one of a head, a trunk, and a neck, the first coordinate information further comprises target area coordinate information corresponding to the target area key point, and the first sign language information comprises second relative position information, the determining module is further configured to obtain second relative position information of the two hands and the target area based on the target area coordinate information and the hand coordinate information of each hand key point.

13. The apparatus according to claim 11, wherein in a case that the human body key point further comprises M mouth key points, the first coordinate information further comprises mouth coordinate information of each of the M mouth key points, and the first sign language information comprises first mouth shape information and a first pronunciation factor, the determining module is further configured to: connect the M mouth key points based on the mouth coordinate information of each of the M mouth key points, to obtain the first mouth shape information, wherein the first mouth shape information corresponds to first hand shape information at a same moment; and
obtain the first pronunciation factor corresponding to the first mouth shape information based on third association information of mouth shape information and a pronunciation factor.

14. The apparatus according to claim 10, wherein the calculation module is further configured to: obtain a first human body action corresponding to the first coordinate information based on the first coordinate information of the first human body key point in the first image; obtain a first word corresponding to the first human body action based on second association information of a human body action and a word; and determine coordinate information of a preset action trajectory corresponding to the first word as a second coordinate action.

15. The apparatus according to claim 10, wherein in a case that the first image comprises R first images, the first coordinate information comprises coordinate information of a first human body key point of each of the R first images, a coordinate prediction model comprises a first sub-model, the second coordinate information comprises first target coordinate information, R is a positive integer greater than 1, and the coordinate prediction model is trained based on a second human body key point and second sign language information of a second image, the calculation module is further configured to: input the coordinate information of the first human body key point of each first image into the first sub-model, and calculate a motion acceleration of the first human body key point in the first sign language action; and
predict second target coordinate information of a first human body key point of the shooting object based on the motion acceleration and first coordinate information of a first human body key point of an i^{th} first image in a case that the shooting object performs the second sign language action, wherein the i^{th} first image is a last image among the R first images.

16. The apparatus according to claim 15, wherein in a case that the coordinate prediction model comprises a second sub-model, and the second coordinate information comprises the second target coordinate information, the calculation module is further configured to: input the first sign language information into the first sub-model, and calculate target semantic information of the photographing object in a case that shooting object performs the first sign language action;
obtain, based on a fourth association relationship between semantic information and an action trajectory, a target action trajectory corresponding to the semantic information; and
determine the second target coordinate information of the first human body key point of the shooting object based on a position of the first sign language action in the target action trajectory in a case that the shooting object performs the second sign language action connected to the first sign language action.

17. The apparatus according to claim 10, wherein in a case that the photographing parameter comprises a photographing position of a photographing module, the adjustment module is further configured to control, based on the second coordinate information the photographing module to move to a target photographing position based on a movement direction of a movement control line in a case that the second coordinate information exceeds a first photographing range for photographing the first image.

18. The apparatus according to claim 10, wherein in a case that the photographing parameter comprises a depth-of-field parameter, and the second coordinate information represents that a first distance between the shooting object and the photographing module is less than or equal to a preset threshold, the adjustment module is further configured to: obtain a first depth-of-field parameter corresponding to the first distance based on fifth association information of a distance and a depth of field; and
adjust an initial depth-of-field parameter for photographing the first image to the first depth-of-field parameter.

19. An electronic device, comprising: a processor, a memory, and a program or instructions stored in the memory and executable by the processor, wherein the program or the instructions, when executed by the processor, implement the steps of the photographing parameter adjustment method according to any one of claims 1 to 9.

20. A readable storage medium, storing a program or instructions, wherein the program or the instructions, when executed by a processor, implement the steps of the photographing parameter adjustment method according to any one of claims 1 to 9.

21. An electronic device, configured to perform the steps of the photographing parameter adjustment method according to any one of claims 1 to 9.

22. A chip, comprising a processor and a communication interface, wherein the communication interface is coupled to the processor, and the processor is configured to execute a program or instructions to implement the steps of the photographing parameter adjustment method according to any one of claims 1 to 9.

23. A computer program product, stored in a non-transient storage medium, wherein the computer program product is executed by at least one processor to implement the steps of the photographing parameter adjustment method according to any one of claims 1 to 9.
